# EUROPÄISCHE PATENTSCHRIFT

(11) **EP 2 353 028 B1**
(45) Veröffentlichungstag und Bekanntmachung des Hinweises auf die Patenterteilung: **02.01.2013**
(21) Anmeldenummer: 09752357.5
(22) Anmeldetag: 12.11.2009
(51) Int. Cl.: G01S 13/75, G01S 13/86, G01C 15/00

(54) **POSITIONSBESTIMMUNGSVERFAHREN UND GEODÄTISCHES VERMESSUNGSSYSTEM**
POSITION DETERMINATION METHOD AND GEODETIC MEASURING SYSTEM
DISPOSITIF DE DÉTERMINATION D'UNE POSITION, ET SYSTÈME DE MESURE GÉODÉSIQUE

(30) Priorität: 03.12.2008 EP 08170621
(43) Veröffentlichungstag der Anmeldung: 10.08.2011
(73) Patentinhaber: Leica Geosystems AG, 9435 Heerbrugg (CH)
(72) Erfinder: GREEN, Alastair, CH-9445 Rebstein (CH); NINDL, Daniel, AT-6800 Feldkirch (AT)
(74) Vertreter: Gyaja, Christoph Benjamin
(86) Internationale Anmeldenummer: PCT/EP2009/065049
(87) Internationale Veröffentlichungsnummer: WO 2010/063545

(56) Entgegenhaltungen:
- EP-A- 0 797 076
- WO-A-90/12284
- WO-A-98/44363
- US-A- 6 104 337

## Beschreibung

Die Erfindung betrifft ein Positionsbestimmungsverfahren für einen Zielpunkt nach dem Oberbegriff des Anspruchs 1, ein geodätisches Vermessungssystem nach Anspruch 9, ein geodätisches Vermessungsgerät nach Anspruch 14 und ein handhaltbares Datenverarbeitungsgerät zur Fernsteuerung und zur Erfassung von Daten eines geodätischen Geräts nach Anspruch 15.

Zum Vermessen eines Zielpunktes sind seit der Antike eine Vielzahl von geodätischen Verfahren bzw. geodätischen Geräten bekannt. Als räumliche Standarddaten werden dabei Entfernung und Winkel von einem Messgerät zum zu vermessenden Zielpunkt aufgenommen sowie insbesondere der Ort des Messgerätes nebst evtl. vorhandenen Bezugspunkten erfasst.

Ein allgemein bekanntes Beispiel für solche Vermessungsgeräte bzw. geodätische Geräte stellt der Tachymeter oder eine Totalstation, die auch als elektronischer Tachymeter oder Computer-Tachymeter bezeichnet wird, dar. Eine solche geodätische Messvorrichtung des Stands der Technik ist beispielsweise in der Veröffentlichungsschrift EP 1 686 350 beschrieben. Derartige Geräte verfügen über elektrosensorische Winkel- und Distanzmessfunktionen, welche eine Richtungs- und Distanzbestimmung zu einem ausgewählten Ziel erlauben. Die Winkel- bzw. Distanzgrössen werden dabei im inneren Bezugssystem des Gerätes ermittelt und müssen für eine absolute Positionsbestimmung ggf. noch mit einem äusseren Bezugssystem verknüpft werden.

Moderne Totalstationen verfügen über Mikroprozessoren zur digitalen Weiterverarbeitung und Speicherung erfasster Messdaten. Die Geräte sind in der Regel in kompakter und integrierter Bauweise hergestellt, wobei meist koaxiale Distanz- und Winkelmesselemente sowie Rechen-, Steuer- und Speichereinheiten in einem Gerät integriert sind. Abhängig von der Ausbaustufe der Totalstation sind Mittel zur Motorisierung der Zieloptik, zur reflektorlosen Streckenmessung, zur automatischen Zielsuche und -verfolgung und zur Fernsteuerung des gesamten Geräts integriert. Aus dem Stand der Technik bekannte Totalstationen verfügen weiters über eine Funkdatenschnittstelle zum Aufbau einer Funkverbindung zu externen Peripheriekomponenten wie z.B. zu einem Datenerfassungsgerät, welches insbesondere als handhaltbarer Datenlogger, Feldrechner, Notebook, Kleincomputer oder PDA ausgebildet sein kann. Mittels der Datenschnittstelle ist es möglich, von der Totalstation erfasste und gespeicherte Messdaten zur externen Weiterverarbeitung auszugeben, extern erfasste Messdaten zur Speicherung und/oder Weiterverarbeitung in die Totalstation einzulesen, Fernsteuersignale zur Fernsteuerung der Totalstation oder einer weiteren externen Komponente insbesondere im mobilen Feldeinsatz ein- bzw. auszugeben und Steuerungs-Software in die Totalstation zu überspielen.

Je nach Ausführung des zu vermessenden Zielpunkts variiert die beim Vermessungsvorgang erzielbare Messgenauigkeit. Wird der Zielpunkt beispielsweise durch einen speziell zur Vermessung ausgebildeten Zielreflektor - wie ein Rundumprisma - dargestellt, so können wesentlich genauere Messergebnisse erreicht werden als bei einer reflektorlosen Messung beispielsweise zu einem zu vermessenden Punkt einer Hauswand. Dies liegt unter anderem daran, dass der ausgesendete optische Messstrahl einen nicht punktförmigen sondern flächigen Strahlquerschnitt aufweist und somit nicht nur am eigentlich zu vermessenden Zielpunkt gestreute Messstrahlung empfangen wird, sondern auch von Punkten in der unmittelbaren Sichtfeldumgebung des Zielpunktes, die ebenso mit der Messstrahlung beaufschlagt werden. Beispielsweise beeinflusst in bekannter Weise die Rauhigkeit der Oberfläche des zu vermessenden Punktes die Genauigkeiten von reflektorlosen Messungen.

Zudem weisen solche geodätische Geräte meist eine Visiereinrichtung zum Anvisieren bzw. Anzielen eines Zielpunkts auf. In einer einfachen Ausführungsvariante ist die Visiereinrichtung beispielsweise als Zielfernrohr ausgebildet. Moderne Geräte können ausserdem eine in das Zielfernrohr integrierte und beispielsweise koaxial oder parallel ausgerichtete Kamera zur Erfassung eines Bildes aufweisen, wobei das erfasste Bild insbesondere als Live-Bild auf einem Display der Totalstation und/oder einem Display des zur Fernsteuerung verwendeten Peripheriegeräts - wie eines Datenloggers - angezeigt werden kann. Die Optik der Visiereinrichtung kann dabei einen manuellen Fokus - beispielsweise eine Stellschraube zur Veränderung der Fokusposition der Optik - aufweisen oder über einen Autofokus verfügen, wobei das Verändern der Fokusposition z.B. durch Servomotoren erfolgt. Automatische Fokussiereinrichtungen für Zielfernrohre geodätischer Geräte sind z.B. aus der DE 19710722, der DE 19926706 oder der DE 19949580 bekannt.

Das optische System der Visiereinrichtung enthält insbesondere eine Objektivlinsengruppe, eine Fokussierlinsengruppe und ein Okular, die in dieser Reihenfolge von der Objektseite her angeordnet sind. Die Position der Fokussierlinsengruppe wird abhängig von der Objektentfernung so eingestellt, dass ein scharfes Objektbild auf einer in der Scharfstellebene angeordneten Strichplatte entsteht. Dieses kann dann durch das Okular betrachtet oder anhand einer koaxial angeordneten Kamera aufgenommen werden.

Bei einem bekannten Visierfernrohr mit Autofokussystem wird die Fokussierlinsengruppe unmittelbar nach Drücken der AF-Starttaste aus der jeweiligen Position in eine andere Position bewegt, um ein anvisiertes Objekt scharf einzustellen.

Mit einem Phasendifferenz-Erfassungssystem wird ein erstmals erfasster Punkt als aktueller Scharfpunkt des anvisierten Objekts angesehen, so dass das Autofokussystem die Fokussierlinsengruppe in eine axiale Position bewegt, die diesem Scharfpunkt entspricht, worauf die Fokussierlinsengruppe stillgesetzt wird.

Bei einer derartigen Autofokussteuerung ist vor dem Durchführen des Autofokusprozesses ein Ausrichten des Zielfernrohrs auf das Ziel erforderlich. Zudem wird bei automatischer Scharfeinstellung eines Ziel-Prismas entweder die das Prisma haltende Fassung oder ein an dem Prisma reflektiertes Bild scharfgestellt. Es wird also unzuverlässig bestimmt, welches der beiden Bilder (ein Bild der Fassung oder ein Bild des Fernrohrs) mit dem Autofokussystem scharfzustellen ist. Besonders kann die Vorderseite der Objektivlinse des Visierfernrohrs als dunkles Bild gesehen werden, während der Kontrast des Fernrohrgehäuses allgemein stark ist, sodass das Fernrohr oft fehlerhaft auf sein eigenes, am Prisma reflektiertes Bild und nicht auf das Prisma scharfgestellt wird.

Bei einer typischen Ein-Mann-Vermessungsaufgabe mit Ziel-reflektor wird beispielsweise im Gelände eine Totalstation aufgestellt. Der Benutzer bewegt eine handgehaltene Vermessungsstange, die den Zielreflektor trägt, an einen zu vermessenden Zielpunkt, wobei daraufhin die Position des Zielreflektors und somit des Zielpunkts wie folgt bestimmt werden kann. Die Steuerung der Totalstation erfolgt insbesondere ferngesteuert durch den die Vermessungsstange tragenden Benutzer mittels eines in Funkverbindung zur Totalstation stehenden Datenloggers. Der Datenlogger kann dabei an der mit dem Zielreflektor ausgestatteten Vermessungsstange angebracht oder neben der Vermessungsstange zusätzlich durch den Benutzer handgehalten werden.

Aus der EP-A-0 797 076 ist ein geodätisches Vermessungssystem für eine Ein-Mann-Vermessung bekannt, bei dem Funkmodule im Vermessungsgerät und in einem handhaltbaren Datenverarbeitungsgerät zur Ausrichtung des Vermessungsgeräts benutzt werden. Die Funksignale dienen zur Übertragung von Kontrollsignalen.

Das Anvisieren eines Zielreflektors kann dabei insbesondere mittels eines dem Benutzer im Display des Datenloggers angezeigten Live-Bildes erfolgen, das von einer - z.B. koaxial im Zielfernrohr oder mit zum Zielfernrohr paralleler Ausrichtung angeordneten - Kamera als Visiereinrichtung der Totalstation bereitgestellt wird. Demnach kann der Benutzer die Totalstation anhand des Live-Bildes entsprechend auf das gewünschte, im Live-Bild erkennbare Ziel ausrichten.

Ist das Live-Bild allerdings nicht auf das Ziel, sondern auf eine andere Entfernung scharfgestellt, so kann oftmals das Ziel im Live-Bild nur erschwert durch den Benutzer erkannt und identifiziert werden. Ein derartiges falsches bzw. zur Erkennung des Ziels ungeeignetes Fokussieren kann dadurch entstehen, dass durch die Autofokus-Funktion ein sich im Zentrum des Kamerabildes befindendes Objekt automatisch fokussiert wird. Vor dem Erkennen und Anvisieren des Ziels befindet sich dieses im Allgemeinen jedoch noch nicht im Zentrum des Bildes, sondern in der Peripherie des Bildes, was zu der für den Benutzer ungeeigneten Fokussierung führt. Zur erleichternden Erkennung und Identifizierung des Zieles kann daher bisher ein aufwändiges manuelles Nachfokussieren der Kameraoptik zur Scharfstellung des Ziels erforderlich sein, sodass die Totalstation daraufhin auf das dann scharf im Bild erkennbare Ziel ausgerichtet werden kann.

Verfügt das geodätische Messgerät über eine automatische Zielsuchfunktion, bei welcher ein grosser Sichtfeldbereich des Messgeräts beispielsweise mittels eines rotierenden, vertikal aufgefächerten Messstrahls abgescannt wird, kann der Zielreflektor im Sichtfeld der Totalstation automatisch gefunden werden. Allerdings kann es insbesondere bei der Identifizierung des Zielreflektors bei einer solchen automatischen Suche zu Problemen kommen. Z.B. kommt es dabei vor, dass auch von weiteren auf einer Baustelle für Vermessungszwecke verwendeten Reflektoren oder auch von weiteren im Sichtfeldbereich der Totalstation liegenden reflektierenden Objekten wie Autolichter oder Glasscheiben Fehlreflexe registriert werden, die nicht eindeutig vom Reflex des eigentlich zu vermessenden Zielreflektors unterschieden werden können. Hierfür ist bisher meist ein aufwändiges und sicheres Identifizieren eines der registrierten Reflexe als der Zielreflektor-Reflex durch einen Benutzer notwendig.

Ebenso kann es bei einer automatischen Zielverfolgung eines Zielreflektors vorkommen, dass die Totalstation den Zielreflektor aus dem Visier verliert. Zum erneuten Auffinden des Zielreflektors kann auch hier eine automatische Zielsuche durchgeführt werden, wobei die oben beschriebenen Probleme bei der Identifizierung des Zielreflektors aus der Menge der bei der Zielsuche registrierten reflektierenden Objekte, die alle als Zielpunkt infrage kommende Zielpunktkandidaten darstellen, auftreten können.

Bei reflektorlosen Messungen zu anvisierten Zielpunkten können zusätzlich weitere Probleme auftreten, wenn sich im Sichtfeld des Messgeräts nahe um das eigentliche anvisierte Zielobjekt liegende weitere Objekte befinden. Dabei kann es vorkommen, dass auch die weiteren Objekte mit der Messstrahlung beaufschlagt werden und auch ein Teil der an diesen Objekten gestreuten Messstrahlung empfangen wird. Prinzipiell können zwar dann die mehreren Entfernungen aus den jeweiligen von den verschiedenen Objekten zurückgestrahlten Anteilen der Messstrahlung bestimmt werden, allerdings ist dennoch eine Identifizierung der Entfernung zum eigentlich zu vermessenden Zielobjekt sowie eine Zuordnung der gesuchten Entfernung zum Zielobjekt erforderlich. Eine solche Identifizierung und Zuordnung ist bei Totalstationen des Standes der Technik meist ebenso durch einen Benutzer durchzuführen und daher aufwändig und fehleranfällig.

Eine Aufgabe der Erfindung ist das Bereitstellen eines verbesserten Positionsbestimmungsverfahrens für einen anhand eines geodätischen Geräts zu vermessenden Zielpunkt. Insbesondere soll sich dabei das Positionsbestimmungsverfahren für eine Ein-Mann-Vermessungsaufgabe eignen.

Eine weitere Aufgabe der Erfindung ist das Erleichtern einer Identifikation des gewünschten Ziels. Im Speziellen soll dazu - bereits vor dem Anvisieren des Ziels - ein durch eine Kamera des Vermessungsgeräts bereitgestelltes Live-Bild schneller und automatisiert auf das Ziel scharfgestellt werden können, sodass eine verbesserte Erkennbarkeit des Ziels gewährleistet werden kann.

Zudem soll durch die Erfindung - insbesondere im Rahmen eines automatischen Zielsuchvorgangs mittels eines aufgefächerten Laserstrahls - eine einfachere Identifizierung des Zielpunktreflexes aus einer Menge von durch weitere Objekte erzeugter Reflexe ermöglicht werden.

Eine weitere Aufgabe ist das Bereitstellen eines - insbesondere hinsichtlich einer vereinfachten Identifizierung des Zielpunktes - verbesserten Vermessungssystems zur Bestimmung der Zielpunktposition sowie eines Vermessungsgeräts und eines Datenverarbeitungsgeräts für ein solches Vermessungssystem.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Bei dem erfindungsgemässen Positionsbestimmungsverfahren für einen Zielpunkt mithilfe eines geodätischen Vermessungsgeräts wird insbesondere das Erkennen bzw. Identifizieren des gewünschten, zu vermessenden Zielpunkts erleichtert und/oder automatisiert. Dabei können je nach Ausbaustufe des Vermessungsgeräts - wie z.B. einer Totalstation oder einem Theodoliten - verschiedene Ausführungsformen mit unterschiedlichen Automatisierungsgraden für das Identifizieren des Ziels realisiert werden. Im Speziellen bezieht sich das Positionsbestimmungsverfahren auf eine Ein-Mann-Vermessungsaufgabe, wobei der Geodät einen oder mehrere Punkte im Gelände vermessen möchte. Dazu wird das Vermessungsgerät, das über eine Entfernungs- und Winkelmessfunktionalität sowie über eine Visiereinrichtung verfügt, im Gelände aufgestellt. Dabei kann das Vermessungsgerät durch ein handhaltbares Datenverarbeitungsgerät, insbesondere einen Datenlogger oder einen Feldrechner, ferngesteuert werden. Zudem ist das Datenverarbeitungsgerät vorzugsweise zum Anzeigen, Speichern und/oder Weiterverarbeiten aufgenommener Messdaten ausgebildet. Zur Datenkommunikation zwischen dem geodätischen Vermessungsgerät und dem handhaltbaren Datenverarbeitungsgerät weisen diese jeweils ein Funkmodul auf.

Zur Positionsbestimmung kann der Geodät eine handgehaltene Vermessungsstange, die einen Zielreflektor trägt, an einen zu messenden Zielpunkt tragen. Anhand des beispielsweise an der Vermessungsstange anmontierten Datenverarbeitungsgeräts wird das geodätische Vermessungsgerät ferngesteuert.

Vor der Positionsbestimmung des Zielpunkts ist allerdings noch ein Identifizieren und Anvisieren des Ziels erforderlich, was mit eingangs beschriebenen Problemen verbunden sein kann.

Da - insbesondere im Rahmen einer solchen Ein-Mann-Vermessungsaufgabe - die Vermessungsstange mit dem zu vermessenden Zielpunkt und das handhaltbare Datenverarbeitungsgerät von einem selben Benutzer bedient werden, ist das Datenverarbeitungsgerät räumlich mit dem Zielpunkt verknüpft. Das Datenverarbeitungsgerät befindet sich innerhalb eines vorgegebenen, verhältnismässig engen Umkreises um den Zielpunkt. Beispielsweise ist der Umkreis durch die Armlänge des Bedieners und/oder durch das Ausmass der Vermessungsstange begrenzt.

Erfindungsgemäss wird anhand einer Laufzeit von Abfrage- und/oder Antwortsignalen der Funkverbindung zwischen erstem und zweitem Funkmodul des Vermessungsgeräts bzw. des handgehaltenen Datenverarbeitungsgeräts eine Grobentfernung zwischen den beiden Funkmodulen bestimmt, und diese Grobentfernung zum Ziellokalisieren - d.h. zum Anzeigen, Erkennen, Identifizieren und/oder Anvisieren des Zielpunktes - verwendet. Dadurch kann das Vermessen oder Lokalisieren des Zielpunktes erleichtert bzw. automatisiert werden.

Beispielsweise kann ein Identifizieren des Zielpunkts aus einer Kandidatenmenge von Zielpunktkandidaten, deren Entfernungen zum Vermessungsgerät jeweils bekannt - insbesondere eingemessen - sind, durch Auswerten der Entfernungen anhand der Grobentfernung weniger aufwändig - z.B. teilweise oder vollständig automatisiert - erfolgen. Insbesondere werden dabei die bekannten bzw. eingemessenen Zielpunktkandidat-Entfernungen abhängig von der Grobentfernung (10) gefiltert.

Ebenso kann die Grobentfernung erfindungsgemäss für eine automatische Fokusfunktion der Visiereinrichtung des geodätischen Vermessungsgeräts verwendet werden, sodass ein automatisches Fokussieren in Abhängigkeit von der Grobentfernung erfolgt. Dadurch kann das zu vermessende Ziel im Visier sofort automatisch - zumindest grob - scharfgestellt und somit verbessert erkannt, identifiziert und anvisiert werden. Beispielsweise weist die Visiereinrichtung eine koaxial oder parallel zu einem Zielfernrohr angeordnete Kamera auf, dessen - erfindungsgemäss automatisch auf die Grobentfernung scharfgestelltes - Live-Bild auf einem Display des Datenverarbeitungsgeräts dem Benutzer bereitgestellt werden kann. Dadurch wird dem Benutzer unter anderem ein schnelleres und erleichtertes Erkennen und Ansteuern des Ziels ermöglicht.

Insbesondere wird eine Fokusposition einer Optik der Visiereinrichtung derart automatisch - insbesondere durch Servomotoren - eingestellt, dass die Visiereinrichtung auf die Grobentfernung fokussiert ist.

Alternativ kann die Grobentfernung im Rahmen der Fokussteuerung jedoch auch lediglich zur Beseitigung von Mehrdeutigkeiten - auf welches Objekt bzw. Bild die automatische Fokussierung erfolgen soll - verwendet werden. Beispielsweise wird bei einer automatischen Scharfeinstellung eines Ziel-Prismas durch aus dem Stand der Technik bekannte Autofokuseinrichtungen entweder die das Prisma haltende Fassung oder ein an dem Prisma reflektiertes Bild scharfgestellt. Da die Grobentfernung in etwa mit der Entfernung zum Zielprisma übereinstimmt, kann nun durch Vergleich der beiden Werte eine korrekte Entscheidung, auf welches Objekt bzw. Bild die Scharfstellung erfolgen soll, getroffen werden, sodass zuverlässig das Prisma scharfgestellt und ein fälschliches Fokussieren auf das im Prisma reflektierte Bild verhindert werden kann.

Ein weiterer Aspekt der Erfindung bezieht sich insbesondere auf einen automatischen Absuchvorgang eines Sichtfeldbereichs des Vermessungsgeräts nach reflektierenden Objekten, die die Zielpunktkandidaten darstellen. Die Funktion eines solchen automatischen Absuchvorgangs, wobei z.B. ein vertikal aufgefächerter Laserstrahl über einen horizontalen Winkelbereich schwenkend ausgesendet wird - ist in den meisten modernen optisch-elektronischen geodätischen Vermessungsgeräten integriert. Im abgesuchten Sichtfeldbereich des Geräts liegt auch der Zielpunkt, der jedoch noch nicht als solcher unter den dafür infrage kommenden reflektierenden Objekten identifiziert ist. Bei dem Absuchvorgang werden mittels des Vermessungsgeräts Positionen von den reflektierenden Punkten, die als Kandidaten für den Zielpunkt infrage kommen, durch mindestens Messen von Zielpunktkandidat-Entfernungen vom Vermessungsgerät jeweils zu den Zielpunktkandidaten bestimmt.

Daraufhin muss der Zielpunkt aus der Menge der Zielpunktkandidaten, für welche jeweils eine Position bestimmt ist, identifiziert und die entsprechende Position dem Zielpunkt zugeordnet werden.

Im Rahmen des beschriebenen Verfahrens wird also eine Reihe von Positionen zu reflektierenden Objekten insbesondere automatisch und hochpräzise bestimmt, worunter auch die gesuchte Position des Zielpunkts ist. Dabei ist allerdings noch nicht bekannt, welche der ermittelten Positionen die Zielpunkt-Position verkörpert.

Gemäss der Erfindung wird nun zu Identifikationszwecken eine Grobentfernung vom geodätischen Vermessungsgerät zu einem Datenverarbeitungsgerät, das sich innerhalb eines vorgegebenen, maximal zulässigen Umkreises um den Zielpunkt befindet und mit dem geodätischen Vermessungsgerät in Funkverbindung steht, bestimmt. Das Bestimmen der Grobentfernung erfolgt dabei durch ein Auswerten von Abfrage- und/oder Antwortsignalen der Funkverbindung nach dem Signal-Laufzeitprinzip. Da das Datenverarbeitungsgerät notwendiger Weise nahe dem Zielpunkt positioniert ist, insbesondere an einem den Zielpunkt aufweisenden Reflektorstab befestigt ist, kann die derart bestimmte Grobentfernung vom ersten zum zweiten Funkmodul ebenso als grobe Entfernung vom geodätischen Vermessungsgerät zum Zielpunkt betrachtet werden. Abhängig von der relativen Lage des Datenverarbeitungsgeräts zum Zielpunkt variiert dabei eine Abweichung der Grobentfernung von der tatsächlichen Entfernung des Zielpunkts zum Vermessungsgerät, sodass ein möglichst nahes Positionieren des Datenverarbeitungsgeräts um den Zielpunkt die Wahrscheinlichkeit für ein richtiges Identifizieren des Zielpunktes aus der Zielpunktkandidatenmenge erhöht und eine Fehlerhaftigkeit der Identifizierung vermindert.

Das Identifizieren an sich erfolgt dabei insbesondere durch ein Auswählen von Zielpunktkandidaten, deren durch das geodätische Vermessungsgerät bestimmte Entfernungen innerhalb eines vorgegebenen, maximal zulässigen Abweichungsbereiches vom Wert der Grobentfernung liegen. Kandidaten, deren bestimmte Entfernung wesentlich von der Grobentfernung abweichen, werden dann zur Identifikation des Zielpunktes ausgeblendet, d.h. nicht berücksichtigt. Dabei kann der maximal zulässige Abweichungsbereich beispielsweise abhängig von einer Messgenauigkeit für das Bestimmen der Grobentfernung und/oder abhängig von der relativen Lage des Datenverarbeitungsgeräts zum Zielpunkt festgelegt werden. Insbesondere kann das Definieren des maximal zulässigen Abweichungsbereichs, mittels welchem als Zielpunkt infrage kommende Kandidaten gefiltert werden, auch in Abhängigkeit von dem für das Positionieren des Datenverarbeitungsgeräts vorgegebenen, maximal zulässigen Umkreis um den Zielpunkt erfolgen.

Zusätzlich der zur Identifizierung erfolgenden Filterung der Zielpunktkandidaten kann z.B. für jeden der vorausgewählten Kandidaten eine Wahrscheinlichkeit, d.h. ein Bestimmtheitsmass, für die Identifikation als der Zielpunkt berechnet und angegeben werden. Entsprechende mathematische Methoden dafür sind dem Fachmann bekannt.

Als weiteres Beispiel für das Verwenden der Grobentfernung zur Identifikation kann auch jener Zielpunktkandidat der Kandidatenmenge als der Zielpunkt identifiziert werden, dessen gemessene Entfernung dem Wert der Grobentfernung am nächsten liegt. Weichen beispielsweise bis auf eine Zielpunktkandidat-Entfernung sämtliche weitere gemessene Zielpunktkandidat-Entfernungen wesentlich von der Grobentfernung ab, so kann die Identifikation des Zielpunktes als der eine Kandidat, dessen Entfernung nahe am Wert der Grobentfernung liegt, als verhältnismässig zuverlässig bestimmt betrachtet werden.

Gemäss einer weiteren Ausführungsform der Erfindung kann die ermittelte Grobentfernung auch unterstützend im Rahmen einer Zielverfolgungsfunktion des geodätischen Vermessungsgeräts verwendet werden. Derartige Zielverfolgungssteuerungen sind in einigen modernen Totalstationen bereits integriert und dem Fachmann hinlänglich bekannt. Die Funktion dient dazu, einen sich bewegenden Zielreflektor fortlaufend durch die Totalstation zu verfolgen und ständig eine aktuelle Position des Ziels zu bestimmen.

Dabei kann es jedoch zu einem Verlust der durch den Messstrahl der Totalstation bereitgestellten optischen Verbindung zum Zielreflektor kommen oder zu einem fälschlichen Anzielen und Weiterverfolgen eines weiteren im Gelände befindlichen Reflektors.

Da - insbesondere im Rahmen einer Ein-Mann-Vermessungsaufgabe - der Geodät den Ziel-Reflektor zusammen mit dem Datenverarbeitungsgerät mit sich führt, kann die Grobentfernung während einer automatischen Zielverfolgung unterstützend für die Steuerung der Zielverfolgung verwendet werden, insbesondere zur Überprüfung der Zielverfolgung. Beispielsweise kann - etwa durch eine Recheneinheit der Zielverfolgungssteuerung - ständig überprüft werden, ob die fortlaufend optisch-elektronisch durch das geodätische Gerät gemessene Entfernung zum Zielreflektor innerhalb eines bestimmten maximalen Entfernungsbereichs um die Grobentfernung liegt, sodass die richtige Identifikation des Zielreflektors während der Zielverfolgung sichergestellt werden kann. Bei einer erheblichen Abweichung der optisch-elektronisch gemessenen Zielreflektor-Entfernung von der Grobentfernung, was beispielsweise bei einem Verlust der optischen Verbindung vom geodätischen Gerät zum Ziel-Reflektor oder bei einer Zielverfolgung eines falschen Reflektors eintreten kann, kann beispielsweise eine Warnmeldung ausgegeben werden, sodass der Benutzer die Zielverfolgung überprüfen und gegebenenfalls erneut initialisieren kann.

Das geodätische Vermessungsgerät ist beispielsweise eine Totalstation oder ein Thoedolit und weist zur Bereitstellung der Funkdatenkommunikationsfunktion ein erstes Funkmodul, d.h. eine integrierte oder ansteckbare Einheit zur Funkdatenkommunikation insbesondere von Messdaten mit weiteren Geräten wie dem Datenverarbeitungsgerät, auf. Entsprechende geodätische Vermessungsgeräte mit einem Funkmodul sind aus dem Stand der Technik bekannt.

Der Zielpunkt wird insbesondere durch einen Zielreflektor, z.B. einem Rundumprisma, dargestellt. Innerhalb einer räumlichen Toleranzumgebung um den Zielpunkt - d.h. innerhalb eines vorgegebenen Umkreises um den Zielpunkt und somit also in unmittelbarer Nähe des Zielreflektors - ist das Datenverarbeitungsgerät positioniert. Beispielsweise kann das Datenverarbeitungsgerät an einen den Zielreflektor tragenden Mast ansteckbar sein und durch einen Benutzer bedient werden, der den Zielreflektormast trägt und diesen im Gelände an einem zu vermessenden Punkt positioniert. Der vorgegebene, maximal zulässige Umkreis um den Zielpunkt, innerhalb welchem das Datenverarbeitungsgerät notwendigerweise zu positionieren ist, ergibt sich implizit im Wesentlichen durch ein gleichzeitig durch einen Benutzer erfolgendes Bedienen sowohl des den Zielpunkt definierenden Zielreflektors als auch des Datenverarbeitungsgeräts. So ist im Allgemeinen das Datenverarbeitungsgerät nicht weiter vom Zielreflektorstab entfernt als eine Armlänge des Benutzers. Zur einfacheren Handhabung ist dabei - wie aus dem Stand der Technik bekannt - das Datenverarbeitungsgerät insbesondere zum Befestigen oder Anstecken an die Zielreflektorstange ausgebildet.

Vorzugsweise ist das Datenverarbeitungsgerät als Datenlogger oder Feldrechner und somit zum Erfassen, Weiterverarbeiten und/oder Speichern von Totalstationsmessdaten sowie zum Fernsteuern einer Totalstation ausgebildet. Gattungsgemässe Datenlogger bzw. Datenerfassungsgeräte sind hinlänglich aus dem Stand der Technik bekannt. Auch dieses Datenverarbeitungsgerät, also insbesondere der Datenlogger, weist eine Funkdatenkommunikationsfunktion auf, die durch ein zweites Funkmodul bereitgestellt wird. Zwischen dem ersten und dem zweiten Funkmodul - d.h. zwischen Vermessungsgerät und Datenverarbeitungsgerät - kann somit eine Funkverbindung zur Datenkommunikation untereinander aufgebaut werden. Wie oben erläutert wird anhand von Funksignalen der Funkverbindung die Grobentfernung zwischen den beiden Geräten bestimmt, anhand welcher der nahe dem Datenverarbeitungsgerät befindliche Zielpunkt erleichtert identifiziert, angezeigt, erkannt und/oder anvisiert werden kann.

Die erfindungsgemäss aus Funksignalen zwischen dem Vermessungsgerät und dem Datenverarbeitungsgerät ermittelte Grobentfernung wird dabei als eine grob bestimmte Entfernung vom geodätischen Gerät zum Zielpunkt betrachtet.

Das zur Bestimmung der Grobentfernung erfolgende Auswerten der Abfrage- und/oder Antwortsignale der Funkverbindung kann dabei anhand von aus dem Stand der Technik bekannter Methoden erfolgen. Insbesondere kann eines der beiden Funkmodule dafür Abfragesignale in Form von Pulsen mit einer bekannten Wiederholungsrate senden, die nach einer fest vorgegebenen Antwortverzögerung durch das andere Funkmodul beantwortet werden. Diese Antwortsignale werden wiederum durch das die Abfragesignale sendende Funkmodul empfangen. Das Zeitintervall zwischen dem Senden der Abfragesignale und der entsprechenden Antwort - abzüglich der Antwortverzögerung - ist nun die Laufzeit der Funksignale für die Strecke vom abfragenden zum antwortenden Funkmodul und zurück. Aus diesem bestimmten Zeitintervall kann nun die Grobentfernung zwischen den beiden Funkmodulen abgeleitet werden. Dieses Prinzip ist unter anderem aus der Sekundärradartechnik seit langem bekannt.

Alternativ kann die Grobentfernung jedoch auch anhand eines einzigen Funk-Signals bestimmt werden. Können beispielsweise erstes und zweites Funkmodul auf Zeitinformation von hinreichend präzise synchronisierten Uhren zurückgreifen, kann ein Signal - das Information bezüglich des Absendezeitpunkts trägt - beispielsweise vom ersten zum zweiten Funkmodul übersendet werden. Beim Empfangen wird ein Empfangs-Zeitpunkt ermittelt, sodass anhand der übermittelten Information bezüglich des Absendezeitpunkts und anhand des Empfangszeitpunkts die Laufzeit des Signals und daraus die Grobentfernung zwischen erstem und zweitem Funkmodul bestimmt werden können.

Vorrichtungsseitig wird erfindungsgemäss die Grobentfernung anhand einer Laufzeiten für die Funksignale erfassenden Auswerteeinheit bestimmt. Insbesondere sind dabei das erste und das zweite Funkmodul kooperativ ausgebildet, sodass Abfragesignale in Form von Pulsen entsprechend vom anderen Funkmodul beantwortet werden. Aus dem Zeitintervall zwischen einem Abfrage- und dem entsprechenden Antwortpuls leitet die Auswerteeinheit dann die Grobentfernung ab.

Die derart bestimmte Grobentfernung, die anhand von aus der Radartechnik bekannten Signalauswerteverfahren üblicherweise etwa mit einer Genauigkeit von einigen Dezimetern bestimmt werden kann, wird gemäss der Erfindung an eine Komponente, die sich zur Erkennung, Anzeige und/oder Identifikation des Zielpunktes eignet, weitergeleitet.

Entsprechend einer Ausführungsform ist eine Einheit zur Identifikation des Zielpunkts aus einer vorab eingemessenen Kandidatenmenge vorhanden. Beispielsweise ist die Einheit als Recheneinheit zur Durchführung des Identifikationsschrittes des erfindungsgemässen, oben beschriebenen Verfahrens ausgebildet. Alternativ oder zusätzlich kann die Einheit ein Display zum Anzeigen der Grobentfernung aufweisen, sodass dadurch einem Benutzer ein Vorgehen zur Filterung der gemessenen Kandidat-Entfernungen und somit zur Identifizierung des Zielpunktes aus der Kandidatenmenge ermöglicht wird. Weist die Komponente eine Recheneinheit und ein Display auf, so können im Speziellen weitere durch die Recheneinheit abgeleitete Informationen angezeigt werden. Beispielsweise können die ausgewählten, innerhalb eines für die Identifizierung maximal zulässigen Abweichungsbereiches um die Grobentfernung liegenden Kandidat-Entfernungen zusammen mit dem Wert der Grobentfernung angezeigt werden. Zusätzlich kann insbesondere jeweils eine Differenz der Zielpunktkandidat-Entfernungen zur Grobentfernung berechnet und angegeben werden. Dies kann einem Benutzer nun ermöglichen, den Zielpunkt aus der Menge der in Frage kommenden, vorselektierten Zielpunktkandidaten einfach zu identifizieren.

Entsprechend einer weiteren Ausführungsform kann als die Komponente eine Fokussteuerung für die Visiereinrichtung des geodätischen Vermessungsgeräts zur automatischen Fokussierung in Abhängigkeit von der Grobentfernung vorgesehen sein. Dabei kann die Fokussteuerung zum derartigen automatischen Einstellen einer Fokusposition einer Optik der Visiereinrichtung - insbesondere durch Servomotoren - ausgebildet sein, dass die Visiereinrichtung automatisch fortlaufend auf die aktuell ermittelte Grobentfernung fokussiert ist.

Als die Visiereinrichtung kann am geodätischen Gerät ein Zielfernrohr, eine Kamera oder ein Zielfernrohr mit integrierter, insbesondere koaxial ausgerichteter Kamera vorgesehen sein. Dabei kann nun ein durch die Kamera erfasstes, zumindest grob auf das zu vermessende Ziel scharfgestelltes Bild per Funk an das zur Fernsteuerung geeignete Datenverarbeitungsgerät übermittelt und dort auf einem Display dargestellt werden. Dies ermöglicht dem Benutzer des Datenverarbeitungsgeräts ein erleichtertes, schnelles Erkennen, Identifizieren und Anvisieren des Ziels bzw. ein Ausgrenzen weiterer vorhandener, jedoch fälschlicher Ziele.

Die Auswerteeinheit kann in das geodätische Vermessungsgerät oder in das Datenverarbeitungsgerät integriert sein. Dasselbe gilt auch für die gegebenenfalls vorhandene Recheneinheit zum Identifizieren des Zielpunktes aus der Kandidatenmenge. Im beispielhaften Fall, dass die Auswerteeinheit in das Vermessungsgerät und die Recheneinheit zum Identifizieren in das Datenverarbeitungsgerät integriert ist, kann die Grobentfernung z.B. über die bestehende Funkverbindung an die Komponente zum Identifizieren des Datenverarbeitungsgeräts übermittelt werden, sodass einem das Datenverarbeitungsgerät bedienenden Benutzer die Identifikation des Zielpunktes vereinfacht ermöglicht oder die Position des als Zielpunkt identifizierten Kandidaten sofort angezeigt wird.

Des Weiteren betrifft die Erfindung ein Computerprogrammprodukt mit Programmcode, der auf einem maschinenlesbaren Träger gespeichert ist, zur Durchführung des Schrittes Identifizieren des Zielpunkts aus einer Kandidatenmenge von Zielpunktkandidaten, deren Entfernungen jeweils eingemessen sind, durch Auswerten der Entfernungen anhand einer Grobentfernung gemäss einem der oben beschriebenen Verfahren, insbesondere wenn das Programm in einer Recheneinheit ausgeführt wird.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig.1: eine typischen Vermessungssituation im Baubereich;
- Fig.2: eine Darstellung eines Absuchvorgangs einer Totalstation, wobei Messgrössen zu reflektierenden Objekten ermittelt werden;
- Fig.3: ein anhand der Grobentfernung erfolgendes Auswählen eines für die Position des Zielreflektors in Frage kommenden Entfernungsbereichs;
- Fig.4: eine Entfernungsachse, auf welcher durch die Totalstation bei einem Absuchvorgang gemessene Entfernungen zu Punkten sowie die bestimmte Grobentfernung aufgetragen sind;
- Fig.5: schematisch dargestellte Schritte des erfindungsgemässen Positionsbestimmungsverfahrens;
- Fig.6: eine reflektorlose Vermessungssituation; und
- Fig.7: einen am Zielreflektorstab angesteckten Datenlogger mit Display, in dem ein erfindungsgemäss fokussiertes Live-Bild der Totalstationskamera angezeigt wird.

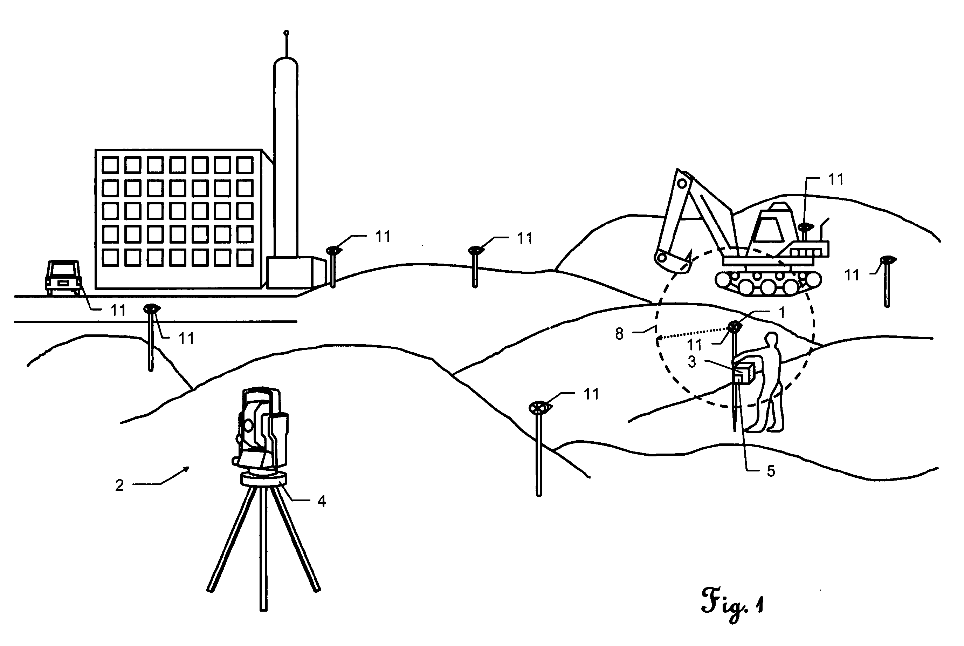

Figuren 1 bis 3 zeigen eine typische Vermessungssituation im Baubereich, wobei die Position eines Zielpunktes 1 hochpräzise bestimmt werden soll. Dazu wird im Gelände eine Totalstation als geodätisches Vermessungsgerät 2 aufgestellt. Ein Benutzer bewegt eine handgehaltene Vermessungsstange mit dem Zielreflektor an den zu vermessenden Zielpunkt 1. Die Steuerung der Totalstation erfolgt ferngesteuert durch den die Vermessungsstange tragenden Benutzer mittels eines in Funkverbindung zur Totalstation stehenden Datenloggers als handhaltbares Datenverarbeitungsgerät 3. Der Datenlogger kann dabei an der Zielreflektorstange angebracht oder neben der Vermessungsstange zusätzlich durch den Benutzer handgehalten werden. Die derartige Anwendung des Datenloggers impliziert eine Positionierung desselben innerhalb eines vorgegebenen Umkreises 8 von maximal etwa 1 bis 2 Metern Radius um den zu vermessenden Zielpunkt 1, wobei der maximal zulässige Umkreis 8 aus Figur 1 ersichtlich ist.

Zur Funkdatenkommunikation weisen der Datenlogger und die Totalstation jeweils ein Funkmodul 4,5 auf. Unter dem Begriff Funkmodul sind dabei jegliche Mittel zu verstehen, die eine Funkkommunikation mit weiteren Funkgeräten ermöglichen. Solche Funkgeräte bzw. Totalstationen und Datenlogger mit integriertem oder ansteckbarem Funkmodem - d.h. mit der Fähigkeit zur Funkdatenkommunikation - sind aus dem Stand der Technik hinlänglich bekannt.

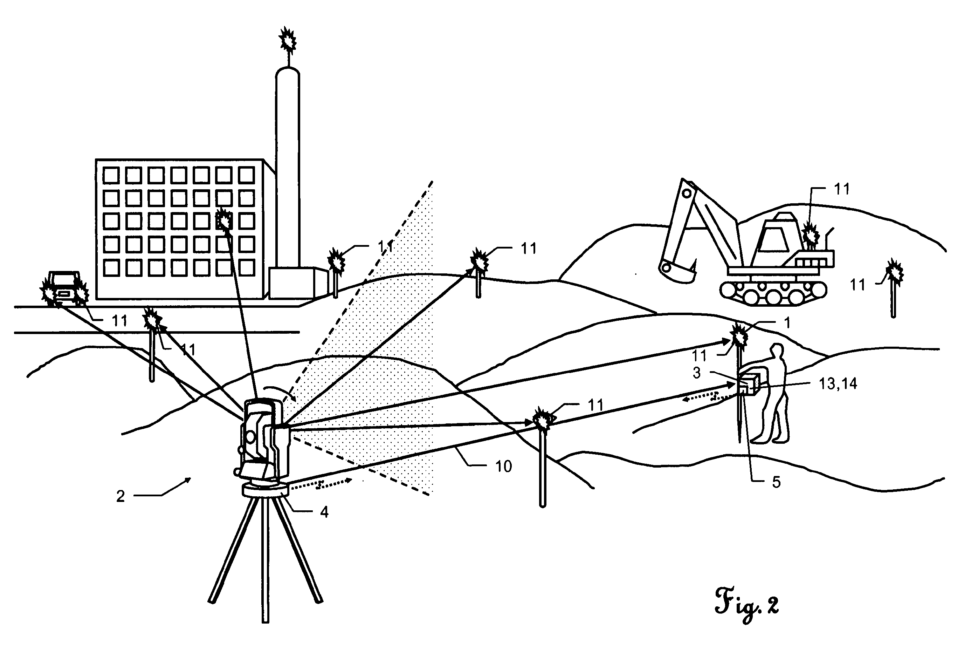

Die gezeigte Totalstation als geodätisches Messgerät 2 verfügt des Weiteren über eine automatische Zielsuchfunktion, bei welcher ein gewisser Sichtfeldbereich des Messgeräts 2 mittels eines rotierenden, vertikal aufgefächerten Messstrahls abgescannt wird. Dabei werden der Reflex durch den Zielreflektor, jedoch auch die Störreflexe durch weitere aufgestellte Reflektoren und durch weitere reflektierende Objekte - wie z.B. Katzenaugen an Fahrzeugen - von der Totalstation registriert. Ebenso im Rahmen dieses Abscannvorgangs, wie es schematisch in Figur 2 dargestellt ist, werden nun die Positionen von sämtlichen als Zielreflektor infrage kommenden, Reflexe erzeugenden Objekten - die somit Zielpunktkandidaten 11 darstellen - bestimmt. Das Bestimmen der Positionen dieser Zielpunktkandidaten 11 erfolgt dabei durch ein - aus dem Stand der Technik bekanntes - optisch-elektronisches Messen von jeweils Zielpunktkandidat-Entfernungen und insbesondere zusätzlich Zielpunktkandidat-Winkeln jeweils von der Totalstation zu den Zielpunktkandidaten 11.

Gemäss der Erfindung sendet nun das Funkmodul 5 des Datenloggers - neben der eigentlichen Datenkommunikation - Abfragesignale in Form von Pulsen mit einer bekannten Wiederholungsrate. Die Abfragepulse werden vom Funkmodul 4 der Totalstation nach einer fest vorgegebenen Antwortverzögerung ebenso in Form von Pulsen als Antwortsignale beantwortet. Diese Antwortsignale werden wiederum durch das Funkmodul 5 des Datenloggers empfangen und durch eine elektronische Auswertekomponente 13, die z.B. in den Datenlogger integriert und daher nicht separat dargestellt ist, wird das Zeitintervall zwischen dem Senden der Abfragesignale und dem Empfangen der Antwortsignale bestimmt. Aus diesem Zeitintervall ermittelt die elektronische Auswerteeinheit 13 des Weiteren - mit Kenntnis der Antwortverzögerung und der Ausbreitungsgeschwindigkeit der Funksignale - eine Grobentfernung 10 zwischen dem Funkmodul 5 des Datenloggers und dem Funkmodul 4 der Totalstation.

Alternativ können auch weitere aus dem Stand der Technik bekannte Methoden zum Bestimmen einer solchen Grobentfernung 10 aus Funksignalen zwischen dem Datenlogger und der Totalstation angewendet werden. Ebenso kann die zur Bestimmung der Grobentfernung 10 ausgebildete Auswertekomponente auch - anstatt in den Datenlogger - in die Totalstation integriert sein.

Aufgrund der Positionierung des Datenloggers im nahen Umkreis 8 um den Zielpunkt 1 - im Speziellen ist der Datenlogger am Zielreflektorstab befestigt - kann die Grobentfernung 10 auch als grobe Entfernung von der Totalstation zum Zielpunkt 1 betrachtet werden. Erfindungsgemäss kann daher die derart bestimmte Grobentfernung 10 zum Identifizieren des Zielpunktes 1 aus der Menge der Zielpunktkandidaten 11, für die jeweils bereits eine Entfernung zur Totalstation präzise gemessen wurde, verwendet werden. Dafür weist der Datenlogger eine - z.B. ebenso darin integrierte und daher nicht separat dargestellte - Einheit 14, insbesondere Recheneinheit, auf, die die gemessenen Zielpunktkandidat-Entfernungen mit der ermittelten Grobentfernung 10 vergleicht.

Beispielsweise kann jener Zielpunktkandidat 11 als der Zielpunkt 1 identifiziert werden, dessen gemessene Zielpunktkandidat-Entfernung aus der Menge der gemessenen Zielpunktkandidat-Entfernungen dem Wert der Grobentfernung 10 am nächsten liegt.

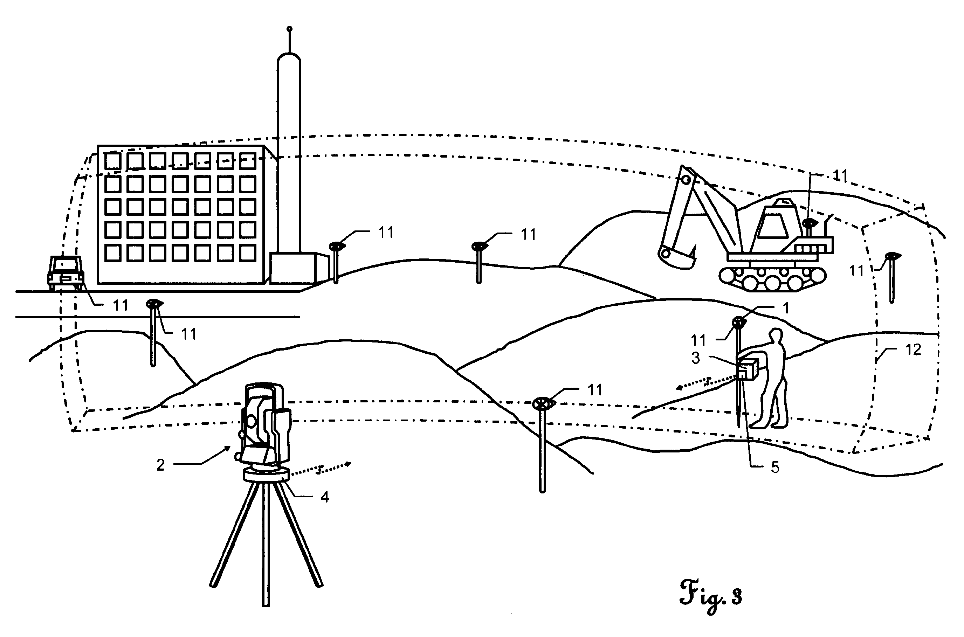

Alternativ kann durch die Recheneinheit auch ein Auswählen von für die Identifikation als der Zielpunkt 1 wahrscheinlichen Zielpunktkandidaten 11 erfolgen. Dafür kann ein maximal zulässiger Abweichungsbereich 12 um den Wert der Grobentfernung 10 vorgegeben und diejenigen Zielpunktkandidaten 11 ausgewählt werden, deren Zielpunkt-Entfernungswerte innerhalb dieses Abweichungsbereiches 12 liegen. Zielpunktkandidaten 11, deren Werte für die jeweils gemessenen Entfernungen zur Totalstation mehr als zulässig von der Grobentfernung 10 abweichen, können dann für die Identifikation ausgeblendet, also ausgefiltert werden. Figur 3 zeigt einen solchen zulässigen, anhand der Grobentfernung 10 festgelegten Abweichungsbereich 12 zur Filterung der Zielpunktkandidaten 11. Dabei können nun die in diesem Bereich positionierten Zielpunktkandidaten 11 ausgewählt und einem Benutzer zur Identifizierung des Zielpunktes 1 angezeigt werden.

In einem Zahlenbeispiel werden bei einem Absuchvorgang durch die Totalstation rein beispielhaft fünf Reflexe registriert und dabei jeweils Entfernungen und Winkel zu den diese Reflexe erzeugenden Objekten - worunter sich auch der Zielpunkt 1 befindet - hochpräzise gemessen. Als Entfernungen werden z.B. 10,424 m, 17,654 m, 24,342 m, 35,684 m und 59,782 m ermittelt. Bei dem durch Auswerten von Funkverbindungssignalen parallel erfolgenden Ableiten der Grobentfernung 10 vom Funkmodul der Totalstation zum Funkmodul des Datenloggers, der nahe dem Zielpunkt 1 positioniert ist, wird z.B. ein Wert von 18, 5 m ermittelt. Ist nun zu Identifikationszwecken beispielhaft als maximal zulässiger Abweichungsbereich 12 ein Bereich von ± 2 m um die Grobentfernung 10 definiert, so wird bei einem durch die Recheneinheit automatisch erfolgenden Filtern der fünf Entfernungen anhand des von der Grobentfernung 10 abhängigen Abweichungsbereichs 12 einzig die Entfernung 17,654 m ausgewählt, die anderen vier Entfernungen werden hingegen ausgeblendet. D.h., dass in diesem Fall die Entfernung 17,654 m als die gesuchte Zielpunkt-Entfernung identifiziert wird sowie die im Zusammenhang mit dieser Entfernung gemessenen Raumwinkel als die gesuchten Zielpunkt-Winkel zugeordnet werden, sodass die Zielpunkt-Position ausgegeben oder gegebenenfalls der Totalstation anschliessenden zu Zwecken einer automatischen Zielverfolgung bereitgestellt werden kann.

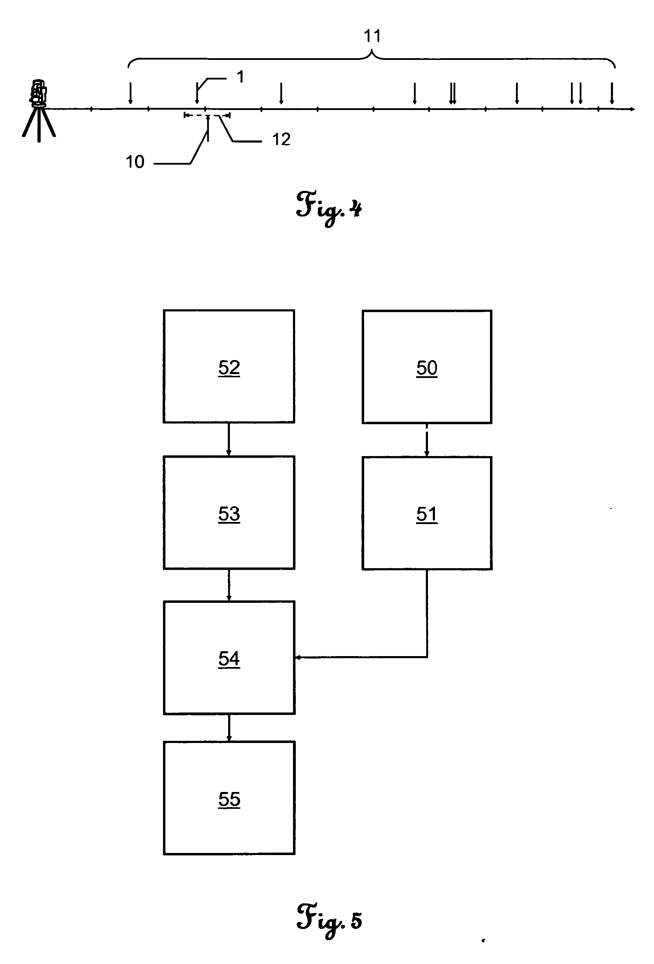

In Figur 4 ist ein Diagramm mit durch die Totalstation gemessenen Zielpunktkandidat-Entfernungen zu den Zielpunktkandidaten 11, die jeweils auf einem zweidimensionalen Entfernungsstrahl eingetragenen sind, dargestellt.

Ebenso gezeigt ist die gemäss der Erfindung bestimmte Grobentfernung 10 zur Identifikation des Zielpunkts 1. Um die Grobentfernung 10 ist des Weiteren der maximal zulässige Abweichungsbereich 12 von derselben für die Identifikation eines Zielpunktkandidaten 11 als der Zielpunkt 1 eingetragen. Im gezeigten Fall würde nun also jener Zielpunktkandidat 11 als der Zielpunkt 1 identifiziert werden, dessen Zielpunktkandidat-Entfernung als einzige aus der Menge aller bestimmten Zielpunktkandidat-Entfernungen innerhalb des zulässigen Abweichungsbereichs 12 liegt. Die für diesen Kandidat hochpräzise bestimmte Position kann daher nun als gesuchte Zielpunkt-Position dem Zielpunkt 1 zugeordnet werden.

In Figur 5 sind die Schritte eines Ausführungsbeispiels des Positionsbestimmungsverfahrens schematisch dargestellt.

Dabei erfolgt ein Aufbauen 50 einer Funkverbindung zwischen dem Funkmodul der Totalstation und dem Funkmodul des Datenloggers, wobei dieser zur Fernbedienung der Totalstation ausgebildet und - im Rahmen des Verfahrens - innerhalb eines nahen, maximal zulässigen räumlichen Umkreises um den zu vermessenden Zielpunkt positioniert ist.

Des Weiteren wird ein optisch-elektronisches Bestimmen 53 von Positionen der Zielpunktkandidaten durch optisch-elektronisches Messen von Zielpunktkandidat-Entfernungen und im Speziellen ebenso von Zielpunktkandidat-Winkel von der Totalstation jeweils zu den Zielpunktkandidaten durchgeführt. Insbesondere können dabei diese Positionen im Rahmen eines automatischen Absuchvorgangs 52 nach im Sichtfeld der Totalstation befindlichen reflektierenden Objekten - die somit Zielpunktkandidaten darstellen - ermittelt werden.

Beispielsweise zeitlich parallel dazu erfolgt - gemäss der Erfindung - ein Bestimmen 51 einer Grobentfernung zwischen dem Funkmodul der Totalstation und dem Funkmodul des Datenloggers anhand einer Laufzeit von Abfrage- und/oder Antwortsignalen der Funkverbindung.

Mithilfe der Grobentfernung, d.h. unter Verwendung der Grobentfernung, wird anschliessend ein Ziellokalisieren 54 - d.h. im Speziellen ein Identifizieren des Zielpunktes aus der Kandidatenmenge - ausgeführt. Die für den als Zielpunkt identifizierten Zielpunktkandidaten hochpräzise bestimmte Position kann nun als die gesuchte Zielpunkt-Position zugewiesen 55 werden.

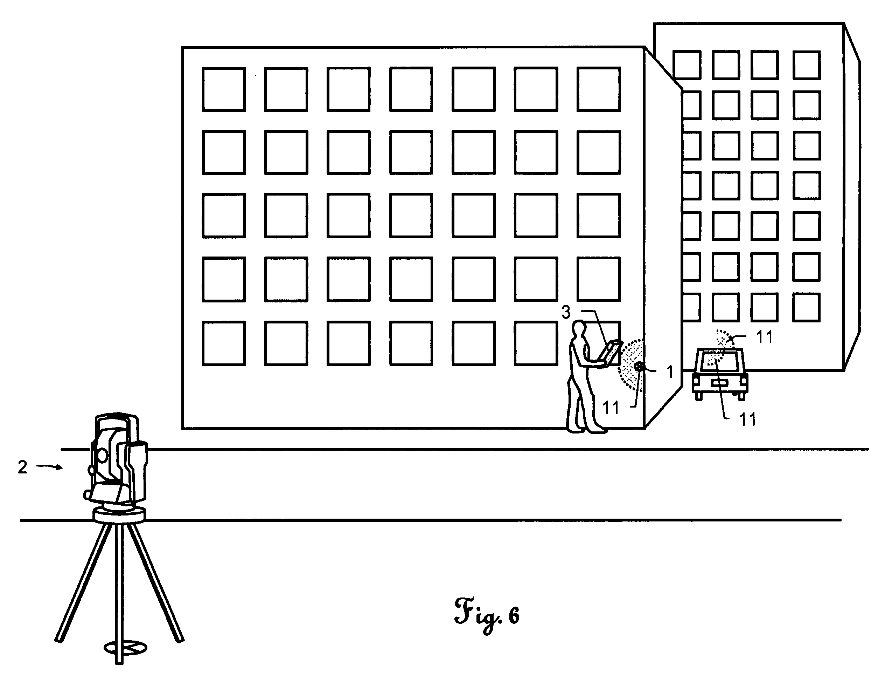

Figur 6 zeigt eine reflektorlose Vermessungssituation, wobei die Position eines Zielpunktes 1 der vorderen Hauswand anhand einer im Gelände aufgestellten Totalstation als geodätisches Vermessungsgerät 2 vermessen werden soll.

Die Totalstation wird dabei durch einen handhaltbaren Datenlogger als Datenverarbeitungsgerät 3 über eine Funkverbindung ferngesteuert. Der Datenlogger wird von einem Benutzer bedient, der sich in unmittelbarer Nähe des zu vermessenden Zielpunktes 1 der Hauswand befindet.

Das Vermessen dieses Zielpunktes 1 erfolgt durch ein aussenden von optischer Strahlung durch die Totalstation in Richtung dieses Zielpunktes 1. Da der Strahlquerschnitt der optischen Strahlung nicht punktförmig sondern flächig ist, wird im gezeigten Fall nicht nur der anvisierte Zielpunkt 1 der vorderen Hauswand, sondern zusätzlich ebenso ein Teil der Rückseite des parkenden Fahrzeuges und ein Teil der Wand des sich im Hintergrund befindenden zweiten Hauses mit der Messstrahlung beaufschlagt. Daher werden auch zurückreflektierte Teile der Messstrahlung jeweils von diesen verschiedenen Objekten, die somit ebenso Zielpunktkandidaten 11 darstellen, empfangen. Prinzipiell können nun aus der empfangenen Messstrahlung die Entfernungen sowohl zum eigentlichen Zielpunkt 1 der vorderen Hauswand, als auch zur Wand des hinteren Hauses sowie zur Autorückseite ermittelt werden. Eine Zuordnung dieser bestimmten Entfernungen zu den jeweiligen Objekten, d.h. welche davon Störentfernungen und welche davon die eigentlich gesuchte Entfernung des Zielpunktes 1 ist, kann dabei nicht ohne weiteres erfolgen.

Gemäss der Erfindung wird nun aus den Funksignalen zwischen der Totalstation und dem Datenlogger eine Grobentfernung bestimmt. Da der Benutzer des Datenloggers sich nahe dem Zielpunkt 1 - d.h. innerhalb eines vorgegebenen, maximal zulässigen räumlichen Umkreises um ebendiesen - befindet, wird anhand der abgeleiteten Grobentfernung die gesuchte Entfernung des Zielpunktes 1 aus den mehreren bestimmten Zielpunktkandidat-Entfernungen identifiziert. Dazu kann - wie bereits oben näher beschrieben - ein Vergleichen der Zielpunktkandidat-Entfernungen mit der Grobentfernung erfolgen und beispielsweise die Entfernung, deren Wert der Grobentfernung am nächsten liegt, als die dem Zielpunkt 1 zuzuordnende Zielpunkt-Entfernung bestimmt werden.

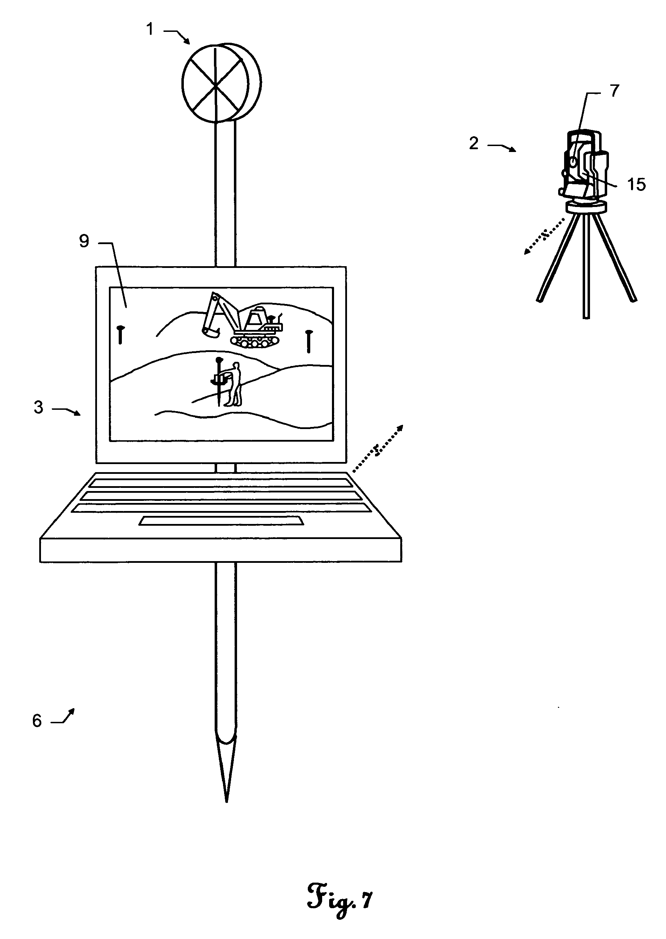

Figur 7 zeigt ein erfindungsgemässes Vermessungssystem 6 mit einem als Totalstation ausgebildeten geodätischen Vermessungsgerät 2 und einem handhaltbaren Datenverarbeitungsgerät 3. Dabei weist das an einem Zielreflektorstab angeordnete und als Datenlogger ausgebildete Datenverarbeitungsgerät 3 ein Display 9 auf, in dem ein erfindungsgemäss fokussiertes Live-Bild einer Totalstationskamera angezeigt wird. Dazu weist die Totalstation als Visiereinrichtung 7 eine Kamera, die optional in ein Zielfernrohr integriert sein kann, mit entsprechender Optik auf.

Der Datenlogger ist dabei räumlich mit dem Zielpunkt 1 verknüpft und befindet sich innerhalb eines vorgegebenen, verhältnismässig engen Umkreises um den Zielpunkt 1.

Gemäss der Erfindung wird anhand einer Laufzeit von Abfrage- und/oder Antwortsignalen der Funkverbindung zwischen erstem und zweitem Funkmodul der Totalstation bzw. des Datenloggers eine Grobentfernung zwischen den beiden Geräten bestimmt, und diese Grobentfernung zum Erleichtern eines Erkennens des Zielpunktes 1 - insbesondere zum automatischen Scharfstellen eines Kamerabildes der Totalstation - verwendet.

Zum Beispiel kann ein automatisches Fokussieren in Abhängigkeit von der Grobentfernung durch die Fokussteuerung 15 für die Visiereinrichtung 9 erfolgen. Dadurch kann das zu vermessende Ziel im Visier fortlaufend automatisch scharfgestellt und somit im Kamerabild verbessert erkannt, identifiziert und anvisiert werden.

Im Besonderen wird dabei eine Fokusposition der Visiereinrichtungs-Optik derart automatisch - insbesondere durch Servomotoren - eingestellt, dass die Visiereinrichtung 7 auf die Grobentfernung fokussiert ist.

Es versteht sich, dass diese dargestellten Figuren nur mögliche Ausführungsbeispiele schematisch darstellen.

## Patentansprüche

1. Positionsbestimmungsverfahren für einen zu vermessenden Zielpunkt (1),
mit
• einem eine Entfernungs- und Winkelmessfunktionalität sowie eine Visiereinrichtung (7) aufweisenden geodätischen Vermessungsgerät (2), insbesondere einer Totalstation oder einem Theodoliten, mit einem ersten Funkmodul (4) und
• einem handhaltbaren Datenverarbeitungsgerät (3), insbesondere einem Datenlogger für das Vermessungsgerät (2), mit einem zweiten Funkmodul (5), wobei das Datenverarbeitungsgerät (3) innerhalb eines vorgegebenen Umkreises (8) um den Zielpunkt (1) positioniert ist,
mit den Schritten
• Aufbauen (50) einer Funkverbindung zwischen dem ersten und dem zweiten Funkmodul (4,5) und
• Bestimmen (53) der Position des Zielpunkts (1),
**dadurch gekennzeichnet, dass**
• eine Grobentfernung (10) zwischen dem ersten und dem zweiten Funkmodul (4,5) anhand einer Laufzeit von Abfrage- und/oder Antwortsignalen der Funkverbindung bestimmt (51) und
• zum Ziellokalisieren (54) - als Anzeigen, Erkennen, Identifizieren und/oder Anvisieren des Zielpunktes (1) - verwendet wird.

2. Positionsbestimmungsverfahren nach Anspruch 1,
**dadurch gekennzeichnet, dass**
die Grobentfernung (10) verwendet wird
• zum Identifizieren des Zielpunkts (1) aus einer Kandidatenmenge von Zielpunktkandidaten (11), deren Entfernungen zum Vermessungsgerät (2) jeweils bekannt sind, durch abhängig von der Grobentfernung (10) erfolgendes Filtern der Entfernungen, und/oder
• für eine automatische Fokusfunktion der Visiereinrichtung (7), sodass ein automatisches Fokussieren in Abhängigkeit von der Grobentfernung (10) erfolgt.

3. Positionsbestimmungsverfahren nach Anspruch 2, wobei die Grobentfernung (10) zumindest zum Identifizieren des Zielpunkts (1) verwendet wird,
**dadurch gekennzeichnet, dass**
jene Zielpunktkandidaten (11) ausgewählt werden, deren Entfernungswerte innerhalb eines definierten, maximal zulässigen Abweichungsbereichs (12) um den Wert der Grobentfernung (10) liegen,
insbesondere wobei der maximal zulässige Abweichungsbereich (12)
• in Abhängigkeit von einer Messgenauigkeit für das Bestimmen der Grobentfernung (10) und/oder
• in Abhängigkeit von einer relativen Lage des Datenverarbeitungsgeräts (3) zum Zielpunkt (1), im Speziellen zusätzlich in Abhängigkeit von dem vorgegebenen Umkreis (8),
festgelegt wird.

4. Positionsbestimmungsverfahren nach Anspruch 3,
**dadurch gekennzeichnet, dass**
jener Zielpunktkandidat (11) als der Zielpunkt (1) identifiziert wird, dessen Entfernungswert dem Wert der Grobentfernung (10) am nächsten liegt.

5. Positionsbestimmungsverfahren nach Anspruch 3 oder 4,
**dadurch gekennzeichnet, dass**
für die Zielpunktkandidaten (11) eine Wahrscheinlichkeit für die Identifikation als der Zielpunkt (1) bestimmt wird.

6. Positionsbestimmungsverfahren nach einem der Ansprüche 3 bis 5,
**dadurch gekennzeichnet, dass**
ein Einmessen der jeweiligen Entfernungen - sowie insbesondere der jeweiligen Winkel - der Zielpunktkandidaten (11) bei einem durch das Vermessungsgerät automatisch durchgeführten Absuchen (52) eines bestimmten Sichtfeldbereiches nach die Zielpunktkandidaten (11) darstellenden reflektierenden Objekten erfolgt.

7. Positionsbestimmungsverfahren nach einem der Ansprüche 3 bis 6,
**dadurch gekennzeichnet, dass**
dem Zielpunkt (1) die gemessene Position des als der Zielpunkt (1) identifizierten Zielpunktkandidaten (11) zugeordnet (55) wird.

8. Positionsbestimmungsverfahren nach einem der vorangehenden Ansprüche, wobei die Grobentfernung (10) zumindest für die Autofokusfunktion der Visiereinrichtung (7) verwendet wird,
**dadurch gekennzeichnet, dass**
eine Fokusposition einer Optik der Visiereinrichtung (7) derart automatisch - insbesondere durch Servomotoren - eingestellt wird, dass die Visiereinrichtung (7) auf die Grobentfernung (10) fokussiert ist, wobei die Visiereinrichtung (7) ausgebildet ist als
• Zielfernrohr,
• Kamera oder
• Zielfernrohr mit koaxial oder parallel dazu ausgerichteter Kamera,
insbesondere wobei ein erfasstes Kamerabild auf einem Display (9) des Datenverarbeitungsgeräts (3) dargestellt wird.

9. Geodätisches Vermessungssystem (6) zur Positionsbestimmung eines Zielpunktes (1) mit
• einem geodätischen Vermessungsgerät (2), insbesondere einer Totalstation oder einem Theodoliten, mit
□ einem ersten Funkmodul (4),
□ einer Entfernungs- und Winkelmessfunktionalität zur Bestimmung von Positionen von reflektierenden Objekten, die Zielpunktkandidaten (11) einer Kandidatenmenge darstellen,
□ einer Visiereinrichtung (7) und
□ insbesondere einer Suchfunktionalität für in einem Sichtfeldbereich befindliche Zielpunktkandidaten (11),
und
• einem räumlich mit dem Zielpunkt (1) verknüpfbaren, handhaltbaren Datenverarbeitungsgerät (3), insbesondere einem Datenlogger mit Fernsteuerfunktion für das Vermessungsgerät (2), mit einem zur Kommunikation mit dem ersten Funkmodul (4) ausgebildeten zweiten Funkmodul (5),
**gekennzeichnet durch**
• eine derart ausgebildete elektronische Auswerteeinheit (13), dass eine Grobentfernung (10) vom ersten zum zweiten Funkmodul (4,5) anhand einer Laufzeit von Abfrage- und/oder Antwortsignalen bei einer Funkverbindung zwischen dem ersten und dem zweiten Funkmodul (4,5) bestimmt wird, und
• mindestens eine der folgenden die Grobentfernung (10) verwendenden Komponenten:
□ eine Einheit (14) zur Identifikation des Zielpunkts (1) aus der Kandidatenmenge in Abhängigkeit von der Grobentfernung oder
□ eine Fokussteuerung (15) für die Visiereinrichtung (7) zur automatischen Fokussierung in Abhängigkeit von der Grobentfernung (10).

10. Vermessungssystem (6) nach Anspruch 9,
**dadurch gekennzeichnet, dass**
die Auswerteeinheit (13) entweder in das Vermessungsgerät (2) oder in das Datenverarbeitungsgerät (3) integriert ist.

11. Vermessungssystem (6) nach Anspruch 9 oder 10, wobei zumindest die Einheit (14) zur Identifikation des Zielpunkts (1) vorhanden ist,
**dadurch gekennzeichnet, dass**
die Einheit (14) als Recheneinheit zum Identifizieren des Zielpunkts (1) aus der Kandidatenmenge durch abhängig von der Grobentfernung (10) erfolgendes Filtern der Zielpunktkandidaten (11) ausgebildet ist,
• insbesondere wobei das Identifizieren entsprechend dem Verfahren nach einem der Ansprüche 3 bis 7 erfolgt, und
• insbesondere wobei die Recheneinheit in das Vermessungsgerät (2) integriert ist.

12. Vermessungssystem (6) nach einem der Ansprüche 9 bis 11, wobei zumindest die Fokussteuerung (15) für die Visiereinrichtung (7) vorhanden ist,
**dadurch gekennzeichnet, dass**
die Fokussteuerung (15) zum derartigen automatischen Einstellen einer Fokusposition einer Optik der Visiereinrichtung (7) - im Speziellen durch Servomotoren - ausgebildet ist, dass die Visiereinrichtung (7) auf die Grobentfernung (10) fokussiert ist, wobei die Visiereinrichtung (7) ausgebildet ist als
• Zielfernrohr,
• Kamera oder
• Zielfernrohr mit koaxial oder parallel dazu ausgerichteter Kamera,
insbesondere wobei ein erfasstes Kamerabild auf einem Display (9) des Datenverarbeitungsgeräts (3) dargestellt wird.

13. Vermessungssystem (6) nach einem der Ansprüche 9 bis 12,
**dadurch gekennzeichnet, dass**
• der Zielpunkt (1) als Zielreflektor ausgebildet und an einer Reflektorstange befestigt ist und
• die Reflektorstange eine Aufnahme zum Anstecken des Datenverarbeitungsgeräts (3) aufweiset.

14. Geodätisches Vermessungsgerät (2), insbesondere eine Totalstation oder ein Theodolit, für das Vermessungssystem (6) nach Anspruch 9 mit
• einem ersten Funkmodul (4),
• einer Entfernungs- und Winkelmessfunktionalität zur Bestimmung von Positionen von reflektierenden Objekten, die Zielpunktkandidaten (11) einer Kandidatenmenge darstellen,
• einer Visiereinrichtung (7) und
• insbesondere einer Suchfunktionalität für in einem Sichtfeldbereich befindliche Zielpunktkandidaten (11),
**gekennzeichnet durch**
• eine derart ausgebildete elektronische Auswerteeinheit (13), dass eine Grobentfernung (10) vom ersten Funkmodul (4) zu einem zweiten Funkmodul (5) eines mit einem Zielpunkt (1) räumlich verknüpften Datenverarbeitungsgeräts (3) anhand einer Laufzeit von Abfrage- und/oder Antwortsignalen bei einer Funkverbindung zwischen dem ersten und dem zweiten Funkmodul (4,5) bestimmt wird, und
• mindestens eine der folgenden die Grobentfernung (10) verwendenden Komponenten:
□ eine Einheit (14) zur Identifikation des Zielpunkts aus der Kandidatenmenge in Abhängigkeit von der Grobentfernung oder
□ eine Fokussteuerung (15) für die Visiereinrichtung zur automatischen Fokussierung in Abhängigkeit von der Grobentfernung (10).

15. Handhaltbares Datenverarbeitungsgerät (3), insbesondere Datenlogger oder Feldrechner, für das Vermessungssystem (6) nach Anspruch 9, wobei das Datenverarbeitungsgerät (3)
• zur Fernsteuerung und zur Erfassung von Daten eines geodätischen Vermessungsgeräts (2) ausgebildet ist,
• räumlich mit einem - durch das geodätische Vermessungsgerät (2) - zu vermessenden Zielpunkt (1) verknüpfbar ist und
• ein zweites Funkmodul (5) aufweist,
**gekennzeichnet durch**
• eine derart ausgebildete elektronische Auswerteeinheit (13), dass eine Grobentfernung (10) vom zweiten Funkmodul (5) zu einem ersten Funkmodul (4) des geodätischen Vermessungsgeräts (2) anhand einer Laufzeit von Abfrage- und/oder Antwortsignalen bei einer Funkverbindung zwischen dem ersten und dem zweiten Funkmodul (4,5) bestimmt wird, und
• eine Einheit (14) zur Identifikation des Zielpunkts (1) aus der Kandidatenmenge, wobei die Einheit (14) ausgebildet ist
□ als Recheneinheit zum Identifizieren des Zielpunkts (1) **durch** abhängig von der Grobentfernung (10) erfolgendes Filtern der Zielpunktkandidaten (11) - insbesondere entsprechend dem Verfahren nach einem der Ansprüche 3 bis 7 - und/oder
□ als Display (9) zur Anzeige der Grobentfernung (10).

## Claims

1. Position determination method for a target point (1) to be measured, comprising
• a geodetic measuring device (2), in particular a total station or a theodolite, which has a distance and angle measurement function as well as a sighting device (7) having a first radio module (4), and
• a handheld data processing device (3), in particular a data logger for the measuring device (2), having a second radio module (5), the data processing device (3) being positioned within a prescribed circumcircle (8) around the target point (1),
having the steps of
• establishing (50) a radio link between the first and the second radio modules (4, 5), and
• determining (53) the position of the target point (1),
**characterized in that**
• an approximate distance (10) is determined between the first and the second radio modules (4, 5) with the aid of a propagation time of interrogation and/or response signals of the radio link (51), and
• is used for target localization (54) - by displaying, detecting, identifying and/or sighting the target point (1).

2. Position determination method according to Claim 1,
**characterized in that**
the approximate distance (10) is used
• in order to identify the target point (1) from a candidate set of target point candidates (11) whose distances from the measuring device (2) are respectively known, by filtering the distances as a function of the approximate distance (10), and/or
• for an automatic focus function of the sighting device (7) so that automatic focusing is performed as a function of the approximate distance (10).

3. Position determination method according to Claim 2, the approximate distance (10) being used at least to identify the target point (1),
**characterized in that**
those target point candidates (11) are selected whose distance values lie within a defined, maximum permissible deviation range (12) round the value of the approximate distance (10), in particular the maximum permissible deviation range (12) being defined
• as a function of a measuring accuracy for the determination of the approximate distance (10), and/or
• as a function of a position of the data processing device (3) relative to the target point (1), in particular additionally as a function of the prescribed circumcircle (8).

4. Position determination method according to Claim 3,
**characterized in that**
that target point candidate (11) whose distance value lies closest to the value of the approximate distance (10) is identified as the target point (1).

5. Position determination method according to Claim 3 or 4,
**characterized in that**
a probability for the identification as the target point (1) is determined for the target point candidates (11).

6. Position determination method according to any one of Claims 3 to 5,
**characterized in that**
a measurement of the respective distances - and, in particular, of the respective angles - of the target point candidates (11) is performed in the course of a search (52), carried out automatically by the measuring device, of a specific field of view region for the reflecting objects representing the target point candidates (11).

7. Position determination method according to any one of Claims 3 to 6,
**characterized in that**
the measured position of the target point candidate (11) identified as the target point (1) is assigned (55) to the target point (1).

8. Position determination method according to any one of the preceding claims, the approximate distance (10) being used at least for the autofocus function of the sighting device (7),
**characterized in that**
a focal position of an optics of the sighting device (7) is set automatically - in particular by servomotors - in such a way that the sighting device (7) is focused on the approximate distance (10), the sighting device (7) being designed as
• a target telescope,
• a camera, or
• a target telescope with a camera aligned coaxially therewith or parallel thereto,
in particular an acquired camera image being displayed on a display (9) of the data processing device (3).

9. Geodetic measuring system (6) for determining the position of a target point (1), comprising
• a geodetic measuring device (2), in particular a total station or a theodolite, having
• a first radio module (4),
• a distance and angle measurement function for determining positions of reflecting objects that represent target point candidates (11) of a candidate set,
• a sighting device (7), and
• in particular, a search function for target point candidates (11) located in a field of view region,
and
• a handheld data processing device (3) spatially linkable to the target point (1), in particular a data logger with a window control function for the measuring device (2), having a second radio module (5) designed for communication with the first radio module (4),
**characterized by**
• an electronic evaluation unit (13) designed in such a way that an approximate distance (10) from the first to the second radio module (4, 5) is determined with the aid of a propagation time of interrogation and/or response signals given a radio link between the first and the second radio modules (4, 5), and
• at least one of the following components using the approximate distance (10):
• a unit (14) for identifying the target point (1) from the candidate set as a function of approximate distance, or
• a focus control (15) for the sighting device (7) for automatic focusing as a function of the approximate distance (10).

10. Measuring system (6) according to Claim 9,
**characterized in that**
the evaluation unit (13) is integrated either in the measuring device (2) or in the data processing device (3).

11. Measuring system (6) according to Claim 9 or 10, at least the unit (14) for identifying the target point (1) being present,
**characterized in that**
the unit (14) is designed as an arithmetic logic unit for identifying the target point (1) from the candidate set by filtering the target point candidates (11) as a function of the approximate distance (10),
• in particular the identification being performed in accordance with the method according to any one of Claims 3 to 7, and
• in particular, the arithmetic logic unit being integrated in the measuring device (2).

12. Measuring system (6) according to any one of Claims 9 to 11, at least the focus control (15) for the sighting device (7) being present,
**characterized in that**
the focus control (15) being designed to automatically set - in particular by means of servomotors - a focal position of an optics of the sighting device (7) in such a way that the sighting device (7) is focused on the approximate distance (10), the sighting device (7) being designed as
• a target telescope,
• a camera, or
• a target telescope with a camera aligned coaxially therewith or parallel thereto,
in particular an acquired camera image being displayed on a display (9) of the data processing device (3).

13. Measuring system (6) according to any one of Claims 9 to 12,
**characterized in that**
• the target point (1) is designed as a target reflector and is fastened on a reflector rod, and
• the reflector rod has a holder for slipping on the data processing device (3).

14. Geodetic measuring device (2), in particular a total station or a theodolite, for the measuring system (6) according to Claim 9, comprising
• a first radio module (4),
• a distance and angle measurement function for determining positions of reflecting objects that represent target point candidates (11) of a candidate set,
• a sighting device (7), and
• in particular, a search function for target point candidates (11) located in a field of view region,
**characterized by**
• an electronic evaluation unit (13) designed in such a way that an approximate distance (10) from the first radio module (4) to a second radio module (5) of a data processing device (3) spatially linked to a target point (1) is determined with the aid of a propagation time of interrogation and/or response signals given a radio link between the first and the second radio modules (4, 5), and
• at least one of the following components using the approximate distance (10):
• a unit (14) for identifying the target point from the candidate set as a function of the approximate distance, or
• a focus control (15) for the sighting device for automatic focusing as a function of the approximate distance (10).

15. Handheld data processing device (3), in particular a data logger or a field computer, for the measuring system (6) according to Claim 9, the data processing device (3)
• being designed for remote control and for acquiring data of a geodetic measuring device (2),
• being spatially linkable to a target point (1) to be measured - by the geodetic measuring device (2) - and
• having a second radio module (5),
**characterized by**
• an electronic evaluation unit (13) designed in such a way that an approximate distance (10) from the second radio module (5) to a first radio module (4) of the geodetic measuring device (2) is determined with the aid of a propagation time of interrogation and/or response signals given a radio link between the first and the second radio modules (4, 5), and
• a unit (14) for identifying the target point (1) from the candidate set, the unit (14) being designed
• as an arithmetic logic unit for identifying the target point (1) by filtering the target point candidates (11) as a function of the approximate distance (10) - in particular, in accordance with the method according to any one of Claims 3 to 7 - and/or
• as a display (9) for displaying the approximate distance (10).

## Revendications

1. Procédé de détermination d'une position pour un point de mire (1) à mesurer avec
• un appareil de mesure géodésique (2) qui présente une fonctionnalité de mesure de distance et d'angle ainsi qu'un dispositif de visée (7), en particulier une station totale ou un théodolite, avec un premier module radio (4) et
• un appareil de traitement de données (3) pouvant être tenu à la main, en particulier un enregistreur de données pour l'appareil de mesure (2), avec un second module radio (5), l'appareil de traitement de données (3) étant positionné à l'intérieur d'un cercle prédéfini (8) autour du point de mire (1),
avec les étapes
• établissement (50) d'une liaison radio entre le premier module radio et le second module radio (4, 5) et
• détermination (53) de la position du point de mire (1),
**caractérisé en ce**
• **qu'**une distance approximative (10) entre le premier module radio et le second module radio (4, 5) est déterminée (51) à l'aide d'une durée de parcours de signaux d'interrogation et/ou de réponse de la liaison radio et
• est utilisée pour la localisation (54) de la cible - en tant qu'affichage, reconnaissance, identification et/ou visée du point de mire (1).

2. Procédé de détermination d'une position selon la revendication 1,
**caractérisé en ce que** la distance approximative (10) est utilisée
• pour l'identification du point de mire (1) à partir d'une quantité de candidats de candidats au point de mire (11), dont les distances de chacun par rapport à l'appareil de mesure (2) sont connues, par filtrage des distances qui se fait en fonction de la distance approximative (10) et/ou
• pour une fonction de focalisation automatique du dispositif de visée (7) si bien qu'une focalisation automatique se fait en fonction de la distance approximative (10).

3. Procédé de détermination d'une position selon la revendication 2, la distance approximative (10) étant utilisée au moins pour l'identification du point de mire (1),
**caractérisé en ce que**
les candidats au point de mire (11) dont les valeurs de distance se situent autour de la valeur de la distance approximative (10) à l'intérieur d'une plage d'écarts maximale admissible (12) définie sont sélectionnés, en particulier cependant que la plage d'écarts maximale admissible (12) est fixée
• en fonction d'une exactitude de mesure pour la détermination de la distance approximative (10) et/ou
• en fonction d'une position relative de l'appareil de traitement de données (3) par rapport au point de mire (1), en particulier en plus en fonction du cercle prédéfini (8).

4. Procédé de détermination d'une position selon la revendication 3,
**caractérisé en ce que**
le candidat au point de mire (11) dont la valeur de distance est située la plus proche de la valeur de la distance approximative (10) est identifié comme étant le point de mire (1).

5. Procédé de détermination d'une position selon la revendication 3 ou 4,
**caractérisé en ce**
**qu'**une probabilité pour l'identification comme étant le point de mire (1) est déterminée pour les candidats au point de mire (11).

6. Procédé de détermination d'une position selon l'une des revendications 3 à 5,
**caractérisé en ce**
**qu'**une prise de mesure des distances respectives - ainsi qu'en particulier des angles respectifs - des candidats au point de mire (11) se fait, lors d'une recherche (52) d'objets réfléchissants qui représentent les candidats au point de mire (11) dans une plage de champ visuel déterminée qui est effectuée automatiquement par l'appareil de mesure.

7. Procédé de détermination d'une position selon l'une des revendications 3 à 6,
**caractérisé en ce**
**que** la position mesurée du candidat au point de mire (11) identifié comme étant le point de mire est attribuée (55) au point de mire (1).

8. Procédé de détermination d'une position selon l'une des revendications précédentes, la distance approximative (10) étant utilisée au moins pour la fonction de focalisation automatique du dispositif de visée (7),
**caractérisé en ce qu'**une position de focalisation d'une optique du dispositif de visée (7) est réglée automatiquement - en particulier par des servomoteurs - de telle manière que le dispositif de visée (7) est focalisé sur la distance approximative (10), le dispositif de visée (7) étant configuré en tant que
• lunette de visée,
• caméra ou
• lunette de visée avec caméra orientée de manière coaxiale ou parallèle à celle-ci,
en particulier cependant qu'une image de caméra détectée est représentée sur un écran (9) de l'appareil de traitement de données (3).

9. Système de mesure géodésique (6) pour la détermination d'une position d'un point de mire (1) avec
• un appareil de mesure géodésique (2), en particulier une station totale ou un théodolite, avec
• un premier module radio (4),
• une fonctionnalité de mesure de distance et d'angle pour la détermination de positions d'objets réfléchissants qui représentent les candidats au point de mire (11) d'une quantité de candidats,
• un dispositif de visée (7) et
• en particulier une fonctionnalité de recherche pour des candidats au point de mire (11) qui se trouvent dans une plage de champ visuel et
• un appareil de traitement de données (3) pouvant être tenu à la main, qui peut être combiné dans l'espace au point de mire (1), en particulier un enregistreur de données avec fonction de télécommande pour l'appareil de mesure (2), avec un second module radio (5) configuré pour la communication avec le premier module radio (4),
**caractérisé par**
• une unité d'évaluation électronique (13) configurée de telle manière qu'une distance approximative (10) du premier module radio au second module radio (4,5) est déterminée à l'aide d'une durée de parcours de signaux d'interrogation et/ou de réponse pour une liaison radio entre le premier module radio et le second module radio (4, 5) et
• au moins l'un des composants suivants qui utilisent la distance approximative (10) :
• une unité (14) pour l'identification du point de mire (1) parmi la quantité de candidats en fonction de la distance approximative ou
• une commande de focalisation (15) pour le dispositif de visée (7) pour la focalisation automatique en fonction de la distance approximative (10).

10. Système de mesure (6) selon la revendication 9,
**caractérisé en ce**
**que** l'unité d'évaluation (13) est intégrée soit à l'appareil de mesure (2), soit à l'appareil de traitement de données (3).

11. Système de mesure (6) selon la revendication 9 ou 10, cependant qu'il existe au moins l'unité (14) pour l'identification du point de mire (1),
**caractérisé en ce**
**que** l'unité (14) est configurée comme unité de calcul pour l'identification du point de mire (1) parmi la quantité de candidats par filtrage des candidats au point de mire (11) qui se fait en fonction de la distance approximative (10),
• en particulier cependant que l'identification se fait selon le procédé selon l'une des revendications 3 à 7 et
• en particulier l'unité de calcul est intégrée à l'appareil de mesure (2).

12. Système de mesure (6) selon l'une des revendications 9 à 11, cependant qu'il existe au moins la commande de focalisation (15) pour le dispositif de visée (7), **caractérisé en ce**
**que** la commande de focalisation (15) est configurée pour un tel réglage automatique d'une position focalisation d'une optique du dispositif de visée (7), en particulier par des servomoteurs, que le dispositif de visée (7) est focalisé sur la distance approximative (10), le dispositif de visée (7) étant configuré en tant que
• lunette de visée,
• caméra ou
• lunette de visée avec caméra orientée de manière coaxiale ou parallèle à celle-ci,
en particulier cependant qu'une image de caméra détectée est représentée sur un écran (9) de l'appareil de traitement de données (3).

13. Système de mesure (6) selon l'une des revendications 9 à 12,
**caractérisé en ce que**
• le point de mire (1) est configuré comme un réflecteur cible et fixé à une tige de réflecteur et
• la tige de réflecteur présente un logement pour fixer l'appareil de traitement de données (3).

14. Appareil de mesure géodésique (2), en particulier station totale ou théodolite, pour le système de mesure (6) selon la revendication 9 avec
• un premier module radio (4),
• une fonctionnalité de mesure de distance et d'angle pour la détermination de positions d'objets réfléchissants qui représentent des candidats au point de mire (11) d'une quantité de candidats,
• un dispositif de visée (7) et
• en particulier une fonctionnalité de recherche pour des candidats au point de mire (11) qui se trouvent dans une plage de champ visuel,
**caractérisé par**
• une unité d'évaluation électronique (13) configurée de telle manière qu'une distance approximative (10) du premier module radio (4) à un second module radio (5) d'un appareil de traitement de données (3) combiné dans l'espace à un point de mire (1) est déterminée à l'aide d'une durée de parcours de signaux d'interrogation et/ou de réponse pour une liaison radio entre le premier module radio et le second module radio (4, 5) et
• au moins l'un des composants suivants qui utilisent la distance approximative (10) :
• une unité (14) pour l'identification du point de mire (1) parmi la quantité de candidats en fonction de la distance approximative ou
• une commande de focalisation (15) pour le dispositif de visée (7) pour la focalisation automatique en fonction de la distance approximative (10).

15. Appareil de traitement de données (3) pouvant être tenu à la main, en particulier enregistreur de données ou ordinateur de terrain, pour le système de mesure (6) selon la revendication 9, cependant que l'appareil de traitement de données (3)
• est configuré pour la télécommande et pour la saisie de données d'un appareil de mesure géodésique (2),
• peut être combiné à un point de mire devant être mesuré (1) - par l'appareil de mesure géodésique (2) - et
• présente un second module radio (5),
**caractérisé par**
• une unité d'évaluation électronique (13) configurée de telle manière qu'une distance approximative (10) du second module radio (5) à un premier module radio (4) de l'appareil de mesure géodésique (2) est déterminée à l'aide d'une durée de parcours de signaux d'interrogation et/ou de réponse pour une liaison radio entre le premier module radio et le second module radio (4, 5) et
• une unité (14) pour l'identification du point de mire (1) parmi la quantité de candidats, l'unité (14) étant configurée
• comme unité de calcul pour l'identification du point de mire (1) par filtrage des candidats au point de mire (11) qui se fait en fonction de la distance approximative (10) - en particulier selon le procédé selon l'une des revendications 3 à 7 et/ou
• comme écran (9) pour l'affichage de la distance approximative (10).
